# EUROPEAN PATENT SPECIFICATION

(11) **EP 3 200 667 B1**
(45) Date of publication and mention of the grant of the patent: **06.05.2020**
(21) Application number: 15778586.6
(22) Date of filing: 02.10.2015
(51) Int. Cl.: A47L 11/30, A47L 11/40

(54) **FLOOR CLEANING APPARATUS WITH OFFSET CLEANING UNIT**
BODENREINIGUNGSVORRICHTUNG MIT VERSETZTER REINIGUNGSEINHEIT
APPAREIL DE NETTOYAGE DE SOL COMPRENANT UNE UNITÉ DE NETTOYAGE EXCENTRÉE

(30) Priority: 02.10.2014 US 201462058737 P; 02.10.2014 US 201462058733 P
(43) Date of publication of application: 09.08.2017
(73) Proprietor: Diversey, Inc., Fort Mill, SC 29708 (US)
(72) Inventor: BAERTSCH, Andre, CH-9512 Rossrueti (CH); GEHRIG, Peter, CH-9606 Buetschwil (CH); JAEHDE, Phillip, CH-8355 Aadorf (CH)
(74) Representative: Sutto, Luca
(86) International application number: PCT/US2015/053780
(87) International publication number: WO 2016/054542

(56) References cited:
- EP-A1- 0 269 632
- EP-A1- 0 269 632
- WO-A1-2010/084030
- WO-A1-2010/084030
- DE-A1- 2 241 901
- DE-U1- 9 115 578
- FR-A- 1 271 628
- US-A- 4 173 056
- US-A- 4 173 056
- US-A- 4 854 005
- US-A- 4 854 005
- US-A- 6 023 813
- US-A- 6 023 813
- US-A1- 2006 064 844
- US-A1- 2006 064 844
- US-A1- 2011 107 529
- US-A1- 2013 212 814

## Description

### Field Of The Invention

This invention relates to a floor cleaning apparatus with a cleaning unit that can be offset, and to a method for cleaning a floor.

### Background Of The Invention

Various powered floor cleaning machines are known in the art, including those in which the operator is standing on the floor and walking behind the machine ("walk-behind" machines), those in which the operator is sitting on the machine ("ride-on" machines), and those in which the operator is standing on the machine ("stand-on" machines).

Ride-on machines are common in the market for cleaning larger areas.

The marketplace desires on the one hand a floor cleaning machine that is capable of cleaning close to a wall, shelf or other boundary area. Fulfilling this need requires that the apparatus have a considerable offset of the cleaning unit, i.e. that the effective cleaning reach of the cleaning assembly of the apparatus extend from the basic footprint of the apparatus itself so that the edges of the floor can be cleaned.

Another desire of the marketplace is a floor cleaning machine that is capable of passing through relatively narrow slots or spaces, e.g. the "check-out" area of a store or other industrial or commercial building, or the narrow entrances to service areas of a building.

Efforts have been made to address these requirements.

One approach is to provide a floor cleaning machine with a cleaning unit with a variable working width. In normal operation, a large working width is employed, but a narrower width can be used that permits the machine to pass through relatively narrow slots or spaces, e.g. check-out areas when needed. Unfortunately, such a system is accompanied by several disadvantages. The mechanical elements of the variable working width cleaning unit are susceptible to exposure to dirt and water; the system is complex; and accessibility for purposes of maintenance is poor. This can lead to a cleaning apparatus with relatively low reliability, and relatively high investment and maintenance costs.

Another need in the marketplace is to link the cleaning unit to the steering mechanism of the machine. One commercial approach has been to attach a cleaning unit directly to the steering axle of the steering mechanism so that turning a steering wheel also turns the cleaning unit. One disadvantage of this approach is that it offers no capability to incorporate a transition ratio between the degree of turn of the steering wheel, and the degree of turn of the cleaning unit.

It would be desirable to have available a floor cleaning machine that provides an offset cleaning mode that offers the capability of cleaning edge areas close to walls, etc., but also a non-offset cleaning mode that enables the machine to pass through relatively narrow slots or spaces.

It would be desirable to have available a floor cleaning machine that provides a mechanism that links the cleaning unit to the steering mechanism of the machine, so that the cleaning unit reorients its position in synchronization with the path of travel of the apparatus, and offers the capability to incorporate a transition ratio between the degree of turn of the steering wheel, and the degree of turn of the cleaning unit.

It would be desirable to have available a floor cleaning machine that provides both an offset and non-offset cleaning mode, while at the same time providing a mechanism that links the cleaning unit to the steering mechanism of the machine.

It would be also be desirable in some cases to have available a floor cleaning machine that additionally provides a cleaning unit with the capability, whether in the off-set cleaning mode or non-offset cleaning mode, of moving in response to contact with an obstacle.

It would be additionally desirable in some cases to have available a floor cleaning machine that does not require a cleaning unit with a variable working width, but instead provides a cleaning unit with a fixed working width.

US4173056A discloses a cleaning apparatus with pivotable bars engaging a cleaning unit. WO2010/084030 discloses a floor washing-drying machine with a front driving and steering wheel, a pair of rear wheels, a brush-carrying head positioned between the front driving wheel and the supporting axle of the rear wheels, and a wiping and vacuuming device arranged behind the rear wheels. The brush-carrying head is connected with the machine frame through a support and steering system of four-arm linkage type which is driven by a gear steering device.

### Summary

A floor cleaning apparatus and a method of cleaning a floor according to the invention are disclosed in the appended claims.

### Brief Description Of The Drawings

The present invention is illustrated by reference to the following drawing figures wherein:
FIG. 1 is a perspective view of a floor cleaning apparatus;
FIG. 2 is a perspective view of a portion of a floor cleaning apparatus;
FIG. 3 is a side elevational view of a portion of a floor cleaning apparatus;
FIG. 4 is a perspective view of a portion of a cleaning assembly;
FIG. 5 is a perspective view of a lifting device and offset mechanism;
FIG. 6 is a perspective exploded view of a lifting device and cleaning assembly;
FIG. 7 is a top plan view of a relevant portion of a floor cleaning apparatus, with the cleaning unit in an offset cleaning mode, and the apparatus moving in a forward direction;
FIG. 8 is a bottom plan view of the floor cleaning apparatus of FIG. 7;
FIG. 9 is a top plan view of a relevant portion of a floor cleaning apparatus, with the cleaning unit in an offset cleaning mode, and the apparatus turning to the left;
FIG. 10 is a bottom plan view of the floor cleaning apparatus of FIG. 9;
FIG. 11 is a top plan view of a relevant portion of a floor cleaning apparatus, with the cleaning unit in an offset cleaning mode, and the apparatus turning to the right;
FIG. 12 is a bottom plan view of the floor cleaning apparatus of FIG. 11;
FIG. 13 is a top plan view of a relevant portion of a floor cleaning apparatus, with the cleaning unit in a non-offset cleaning mode, and the apparatus moving in a forward direction;
FIG. 14 is a bottom plan view of the floor cleaning apparatus of FIG. 13;
FIG. 15 is a top plan view of a relevant portion of a floor cleaning apparatus, with the cleaning unit in a non-offset cleaning mode, and the apparatus turning to the left;
FIG. 16 is a bottom plan view of the floor cleaning apparatus of FIG. 15;
FIG. 17 is a top plan view of a relevant portion of a floor cleaning apparatus, with the cleaning unit in a non-offset cleaning mode, and the apparatus turning to the right; and
FIG. 18 is a bottom plan view of the floor cleaning apparatus of FIG. 17.

### Definitions

"Cleaning" and the like herein refers to treating a floor; in one embodiment, this involves the use of a cleaning fluid and at least one brush, but alternatively or additionally refers to any of burnishing, polishing, vacuuming, sweeping, or brushing, with or without a cleaning fluid, or otherwise affecting the condition of, a floor.

"Offset" and "offset mode" and the like herein refer to a position of the cleaning unit, and to a cleaning mode, in which the cleaning unit is configured to project sufficiently beyond one lateral side of the floor cleaning apparatus to effect cleaning of areas of the floor, e.g. edge areas, beyond a lateral side of the floor cleaning apparatus per se, i.e. beyond the footprint of the apparatus per se. "Non-offset" and "non-offset mode" and the like herein refers to a position of the cleaning unit, and a cleaning mode in which the cleaning unit is configured not to project significantly beyond either lateral side of the floor cleaning apparatus per se, i.e. not significantly beyond the footprint of the apparatus per se. The floor cleaning apparatus disclosed herein is configured to operate selectively in either an offset or non-offset cleaning mode.

"Fixed working width" with respect to the cleaning unit herein means that the working width of the cleaning unit itself, i.e. the width of the portion of the unit that effects cleaning, remains constant whether the apparatus is in an offset mode or non-offset mode.

"Operative mode" and the like herein refers to a mode in which the cleaning unit is activated.

"Navigational mode" and the like herein refers to a mode in which the floor cleaning apparatus is traversing a floor surface, with the cleaning unit either activated or deactivated.

### Detailed Description Of The Invention

The drawings illustrate the configuration and operation of a floor cleaning apparatus 10 in accordance with the invention. Apparatus 10 includes a housing 12. In one embodiment, housing 12 includes a forward component 14, an intermediate component 16, and a rearward component 18.

Apparatus 10 is adapted to move across the floor in a direction of travel, the direction of travel at least partially defining, in one embodiment, a front end 15, a back end 19, and first, left 17 and second, right 21 lateral sides of the apparatus.

Apparatus 10 traverses the floor by means of a plurality of wheels. In one embodiment, the apparatus can include two front wheels, i.e. left front wheel 20 and right front wheel 22 connected by a front axle 42, and two rear wheels, i.e. left rear wheel 24 and right rear wheel 26 connected by a rear axle 44. The two front wheels 20, 22 can be spaced apart a distance equal to the distance between the two rear wheels 24, 26. Alternatively, the front wheels 20, 22 can be spaced apart a distance greater than, or less than, the distance between the two rear wheels 24, 26. Alternatively, the apparatus can have a single front wheel and a pair of rear wheels; or a pair of front wheels and a single rear wheel. The apparatus includes at least one drive wheel. Any or all of the wheels can be drive wheels, and the apparatus can include one or more caster or free wheels. The plurality of wheels by which the floor cleaning apparatus is adapted to move across the floor in a direction of travel, can include one or more drive wheels, such as a pair of driving wheels for moving the body, a motor, such as an electric motor, for directly or indirectly driving the wheel or wheels, and steering and speed control members for operating the driving motor. Steering may either be manual or by way of differentiated control of individual wheel speeds.

Apparatus 10 includes a motive device 27 (such as at least one motor, not explicitly shown) for moving the apparatus 10 across the floor. Drive wheels can be connected to and powered by electric motors indirectly by e.g. a belt or a chain, but other connections can also be used, e.g., the wheels can be individually powered by hub motors.

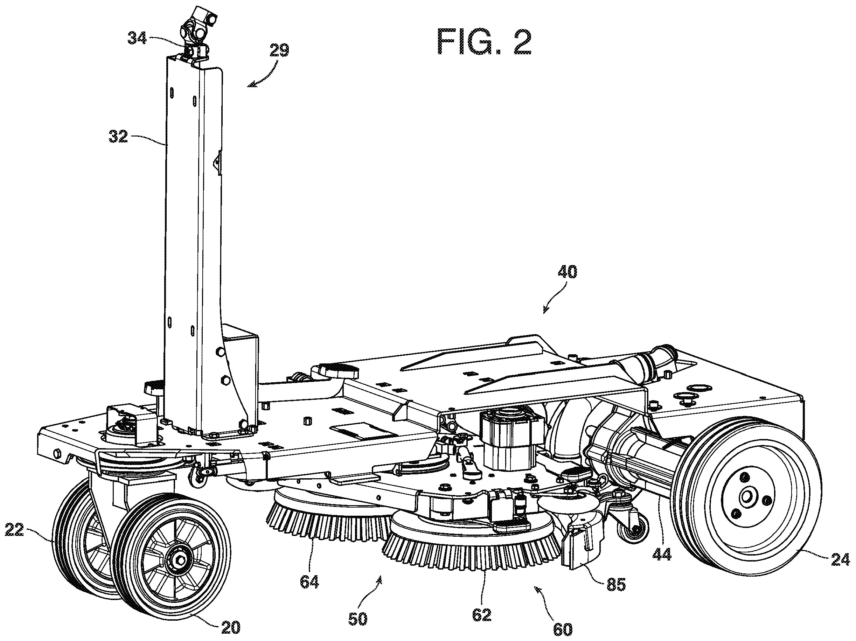

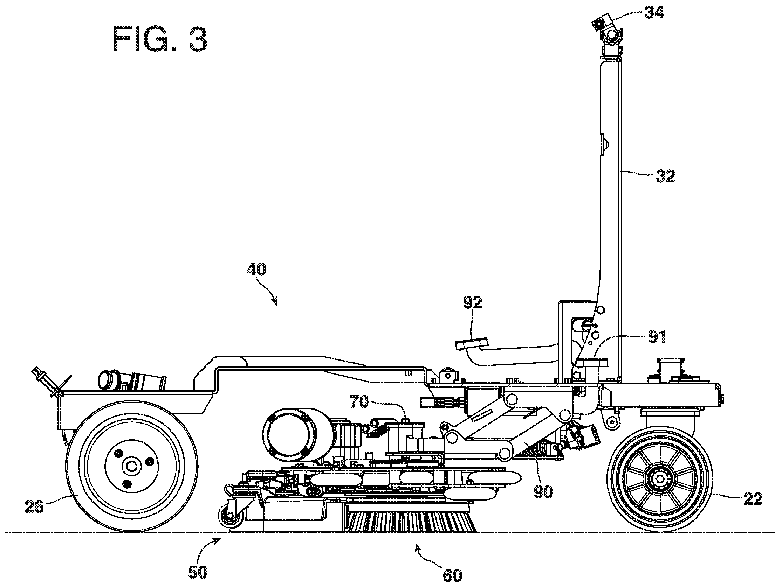

Apparatus 10 includes a steering mechanism 29, which can include a conventional steering wheel 30. Instead of a steering wheel, mechanism 29 can have other configurations; for example, the apparatus 10 can comprise two hand gears or levers, one for each front wheel, which are pulled forward or backward, etc. Steering mechanism 29 also includes the appropriate steering linkage 34 (see Figs. 2&3) to operationally couple e.g. the steering wheel 30 to the wheels 20,22 used to guide the path of the floor cleaning apparatus 10; as well as a steering housing 32 to accommodate the steering linkage 34. Steering mechanism 29 can also include a user interface or dashboard. Steering can be controlled by the front wheel or wheels 20, 22, or by the back wheel or wheels 24, 26.

Apparatus 10 includes a cleaning assembly 50 for cleaning the floor. Cleaning assembly 50 includes a cleaning unit 60. In one embodiment, cleaning unit 60 comprises a brush assembly. Cleaning unit 60 can include one or more brushes, such as a circular brush or brushes, suitably powered by an electric motor or other motive device to turn the brushes when the apparatus is in cleaning mode. In one embodiment, cleaning unit 60 includes a left brush 62 and a right brush 64. In one embodiment, these brushes operate to rotate in opposite directions so as to maximize the scrubbing function while moving soil and spent liquid toward a region under the machine where an optional squeegee/vacuum 85 can pick up the spent liquid from the floor. The brushes can be of any suitable material, size, shape, and bristle density and pattern. In one embodiment, brushes 62 and 64 are offset from each other with respect to the longitudinal centerline of the floor cleaning apparatus; i.e. a brush centerline running through the center of the two brushes is in one embodiment not perpendicular to the longitudinal center line of the apparatus, or is not transverse to the direction of travel of the apparatus during operation. Such an arrangement minimizes the lateral extent of the cleaning unit, when operating in non-offset mode, to control the lateral extent of the apparatus, and so that the apparatus 10 can pass through relatively narrow slots, spaces or passageways.

Alternatively or additionally, the cleaning unit 50 can comprise a brush assembly in combination with a dispenser for dispensing a cleaning solution onto the floor; a burnishing device; a polishing device; a sweeping device; a vacuum device; or any suitable combination of the above.

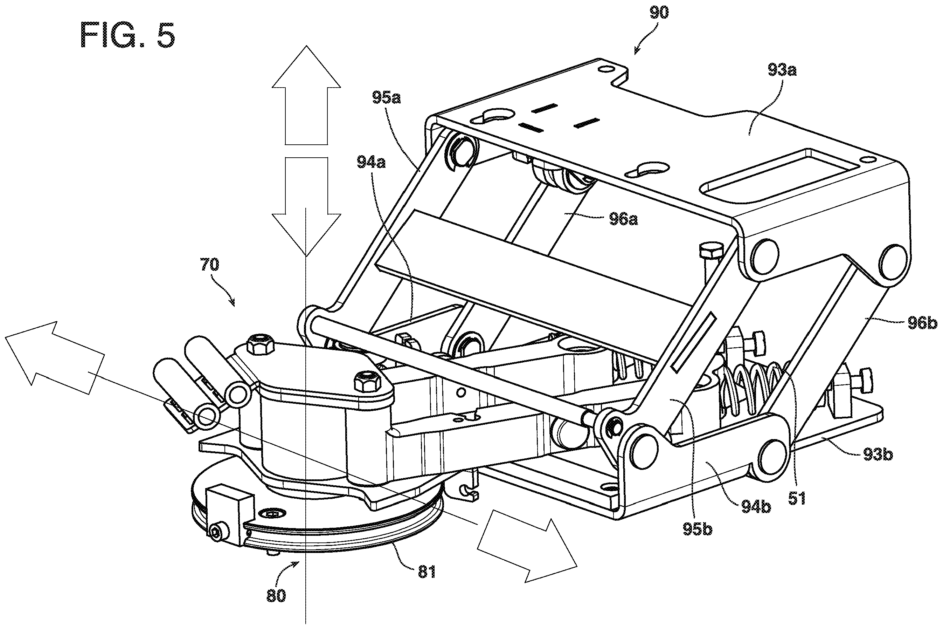

According to the invention, the cleaning assembly 50 also includes an offset mechanism 70 adapted to move the cleaning unit to or from an offset position. As shown in Fig. 5, offset mechanism 70 enables the cleaning unit to move from a non-offset position and cleaning mode to an offset position and cleaning mode, or from an offset position and cleaning mode to a non-offset position and cleaning mode. The floor cleaning apparatus according to the invention is configured to operate selectively in either an offset or non-offset cleaning mode. The horizontal arrows of Fig. 5 represent the field of motion of offset mechanism 70. Offset mechanism 70 is supported within the framework of lifting device 90. The shifting or moving action of offset mechanism 70 can be accomplished mechanically or electrically. For instance, mechanical actuation might occur via a suitable manual shifting device, (e.g. by suitable linkage to a food pedal such a pedal 92, see Fig. 3, or to a hand-operated lever). In an embodiment illustrated in Fig. 3, pushing down on and then releasing the foot pedal 92 activates the offset mechanism 70 to move the mechanism, and thus the cleaning unit 60, from a non-offset position and mode to an offset position and mode. Repeating this action moves mechanism 70, and thus the cleaning unit 60, from the offset position and mode back to the non-offset position and mode. Similarly, in embodiments not explicitly shown, the offset mechanism 70 might be actuated electronically by the operator activating a button, switch, touch panel or other input device to actuate a DC or AC motor such as a servomotor or a linear motor. A motor (not shown) can move the cleaning unit 60 to and from the offset position with less physical input from an operator. This offset movement can be accomplished when the cleaning unit 60 is in a lower or operative position (e.g. when a brush assembly is in contact with the floor) or when the cleaning unit 60 is in a raised or non-operative position (e.g. when a brush assembly is not in contact with the floor). This latter configuration of the apparatus may occur e.g. when the apparatus is being navigated from one location to another.

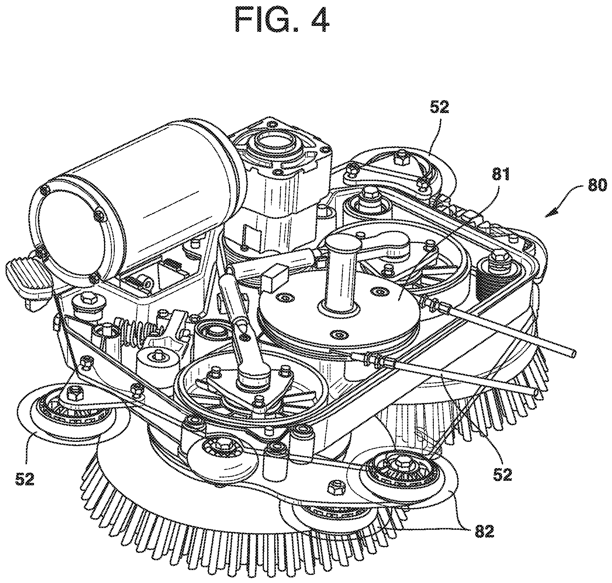

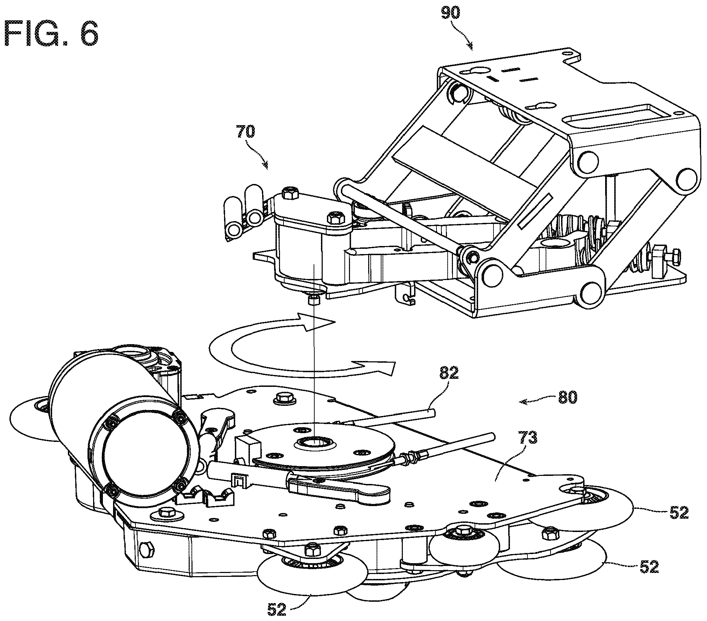

The cleaning unit 60 in one embodiment includes a biasing member 51, such as one or more springs (see Figs. 5 and 6) that facilitates movement of the offset mechanism 70 and thus cleaning unit 60 to and from an offset position. When the apparatus is operating in an offset position and mode, and the cleaning unit bumps into an obstacle (wall, etc.), the mechanism 70 and cleaning unit 60 will move toward a non-offset position, effectively moving toward the underside of the apparatus; after engagement with the obstacle has discontinued, mechanism 70 and cleaning unit 60 return to their offset position with the assistance of the one or more biasing members 51. One or more edge wheels 52 are situated along the peripheral edges of the cleaning unit 60. The edge wheels 52, in combination with the biasing member(s) 51, serve to minimize damage to the cleaning unit 60 and/or any obstacles since the wheels 52 will roll along the surface of an obstacle while the cleaning unit 60 moves towards the underside of the apparatus 10 under the force of any impact. Cleaning assembly 50 according to the invention includes a swing mechanism 80 (see Figs. 4, 5, and 6) linking the cleaning unit 60 to the steering mechanism 29 such that when the floor cleaning apparatus 10 is in an operative mode, the cleaning unit 60 reorients its position in synchronization with the path of travel of the floor cleaning apparatus 10. This component and functionality of the floor cleaning apparatus 10 is available both when the apparatus operates in an offset cleaning mode, and when the apparatus operates in a non-offset cleaning mode.

In another embodiment, when the floor cleaning apparatus 10 is in a navigational mode, the cleaning unit 60 reorients its position in synchronization with the path of travel of the floor cleaning apparatus 10.

Swing mechanism 80 can include e.g. a pivot wheel 81, and is connected, in the illustrated embodiment, to support plate 73 of the cleaning assembly 50, and by means of endless belt or cable 82 (e.g., a Bowden cable) is also connected to steering mechanism 29. In operation, as an operator of the floor cleaning apparatus 10 turns to the left or the right using the steering mechanism 29, the cleaning unit 60 swings and reorients in synchronization with the steering mechanism 29. As illustrated, the cleaning unit 60 pivots about the axis of the pivot wheel 81. In other embodiments, the cleaning unit 60 may be configured to pivot about multiple pivot points, such as about multiple pivot wheels 81 that are rotatably driven by multiple endless cables 82. This swing functionality provides operational efficiency compared with a system in which the cleaning unit does not respond to and synchronize a change in its orientation with a change in the path of travel of the floor cleaning apparatus. In embodiments that include the deposition of a cleaning fluid onto the floor, and a squeegee/vacuum system 85 for picking up spent cleaning fluid, the wetted cleaning path on the floor should be completely or nearly covered by the cleaning unit, i.e. the spent cleaning fluid should be captured by the squeegee/vacuum system 85 and sucked up from the floor, even when the floor cleaning apparatus is making a sharp turn. Conventionally, this function requires a long squeegee/vacuum system 85 (suction foot) to be sure to pick up all the spent cleaning fluid, but such an arrangement is at odds with the need to drive through narrow floor areas. The swing mechanism of the invention enables the use of a relatively short squeegee/vacuum system 85 while still providing effective suction of spent cleaning fluid even during sharp turns of the apparatus.

In one embodiment, swing mechanism 80 includes the capability of incorporating a transition ratio between the degree of turn of the steering wheel, and the degree of turn of the cleaning unit.

In one embodiment, swing mechanism 80 is not linked directly to the steering axle of the steering mechanism.

In one embodiment, the swing mechanism 80 includes a pivot wheel 81 positioned above the cleaning unit 60, as shown in Fig. 6. In another embodiment, the swing mechanism 80 includes a pivot wheel 81 positioned between the cleaning unit 60 and the offset mechanism 70.

Apparatus 10 includes in one embodiment a lifting device 90 adapted to selectively raise and lower the cleaning assembly 50. As shown in Figures 3 and 5, in one embodiment lifting device 90 is affixed by an upper plate 93a to the chassis 40. The device 90 is in one embodiment a parallelogram-shaped framework that can be powered (by motive means not shown, such as e.g. an electric motor, or mechanically) to raise and lower the cleaning assembly 50. Spaced-apart connecting bars 95a/95b, and 96a/96b pivotably connect upper plate 93a to lower plate 93b. It can be seen that as the connecting bars and/or lower plate 93b are activated to raise lower plate 93b, in a direction away from the floor, the cleaning assembly is also raised from the floor. Because of the parallelogram configuration of lifting device 90, the relatively level planar position of cleaning assembly 50, and in particular cleaning unit 60, remains essentially the same during raising or lowering by lifting device 90.

Apparatus 10 includes in one embodiment an operator seat 28, situated between the forward component and the rearward component, and adapted to accommodate a human operator.

Apparatus 10 includes in one embodiment a chassis 40 (see Fig. 2) that provides a supporting frame for the housing and other components of the apparatus.

Apparatus 10 includes in one embodiment a support plate 73 (see Figure 6) that serves to support the offset mechanism 70 and swing mechanism 80, and also supports the underlying cleaning unit 60.

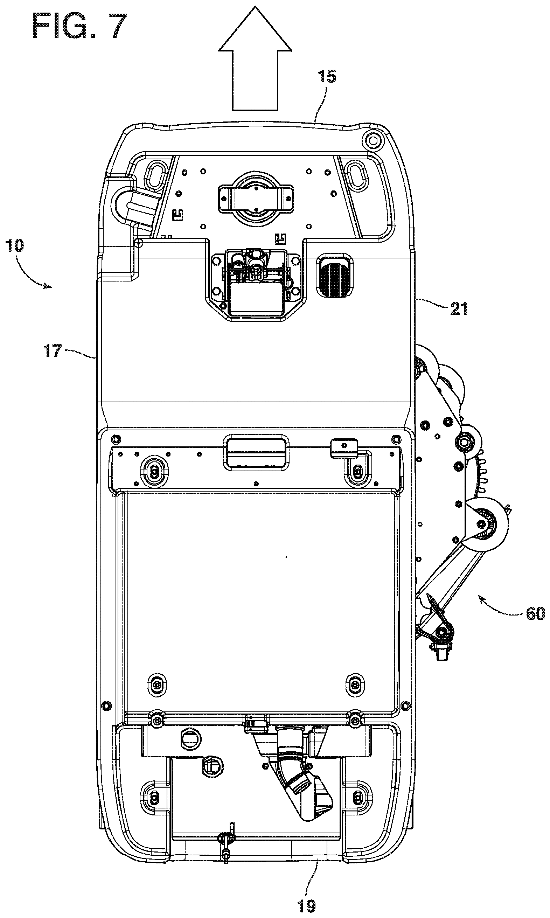

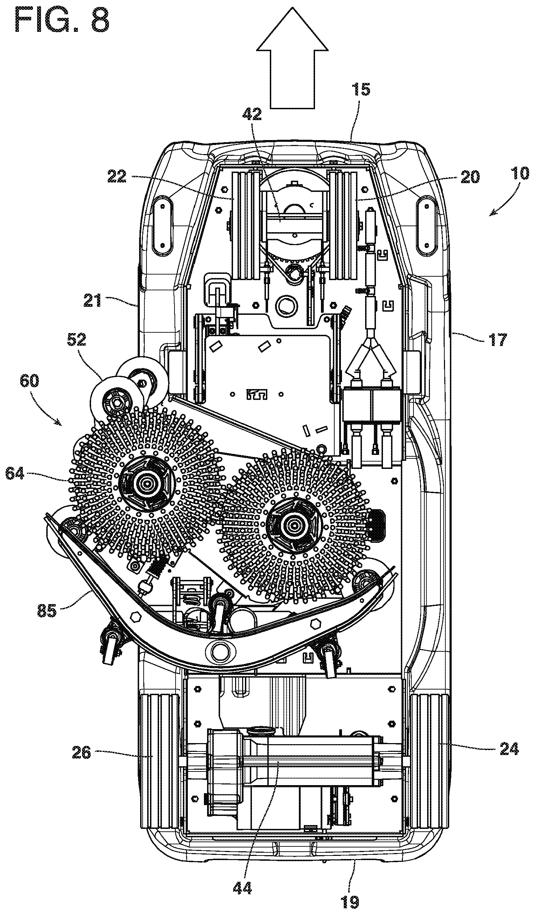

Figs. 7 and 8 show a top and bottom plan view respectively of a floor cleaning apparatus 10, with the cleaning unit 60 in an offset cleaning mode, and the apparatus 10 moving in a forward direction. It can be seen that a portion of the cleaning unit 60, including a portion of cleaning brush 64, extends beyond the footprint of the floor cleaning apparatus 10. In the offset cleaning mode as shown, the apparatus 10 is configured to clean edge or floor areas to the lateral right side 21 of the apparatus, e.g. floor areas adjacent a wall that would be difficult or impossible to clean otherwise with the same apparatus in a non-offset position.

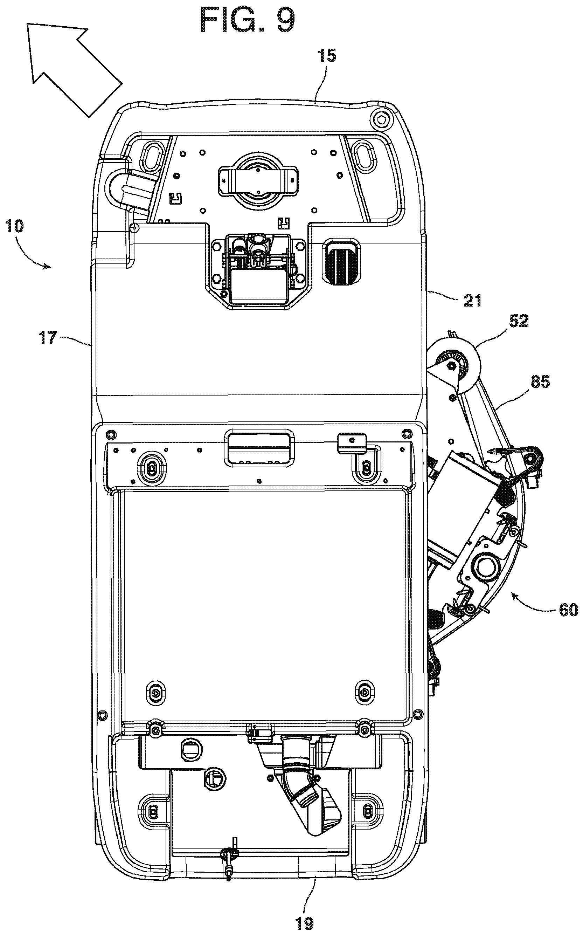

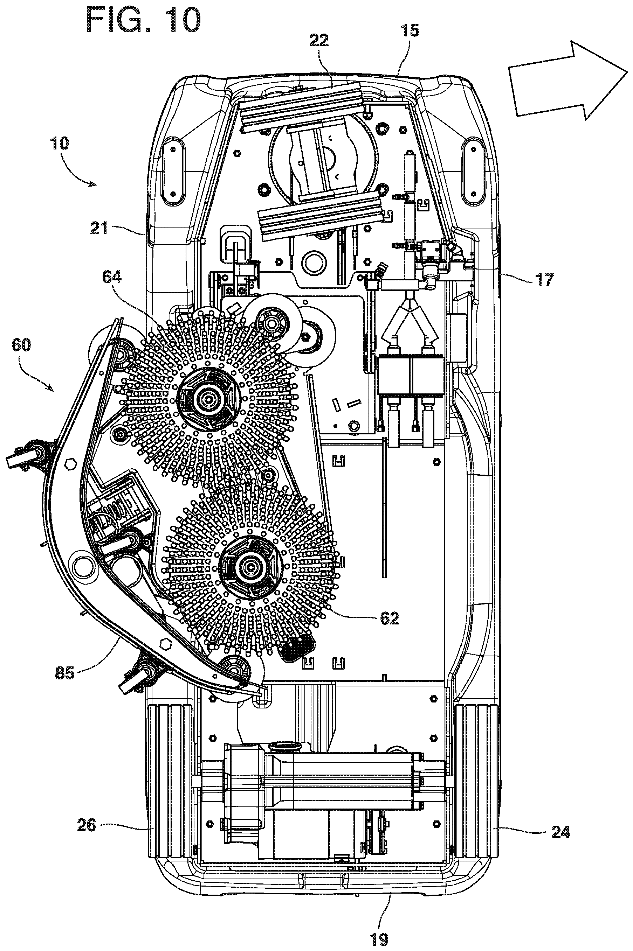

Figs. 9 and 10 show a top and bottom plan view respectively of a relevant portion of a floor cleaning apparatus 10, with the cleaning unit 60 in an offset cleaning mode, and the apparatus 10 turning to the left. As with the apparatus as shown in Figs. 7 and 8, the apparatus 10 is configured to clean edge or other floor areas to the lateral right side 21 of the apparatus 10.

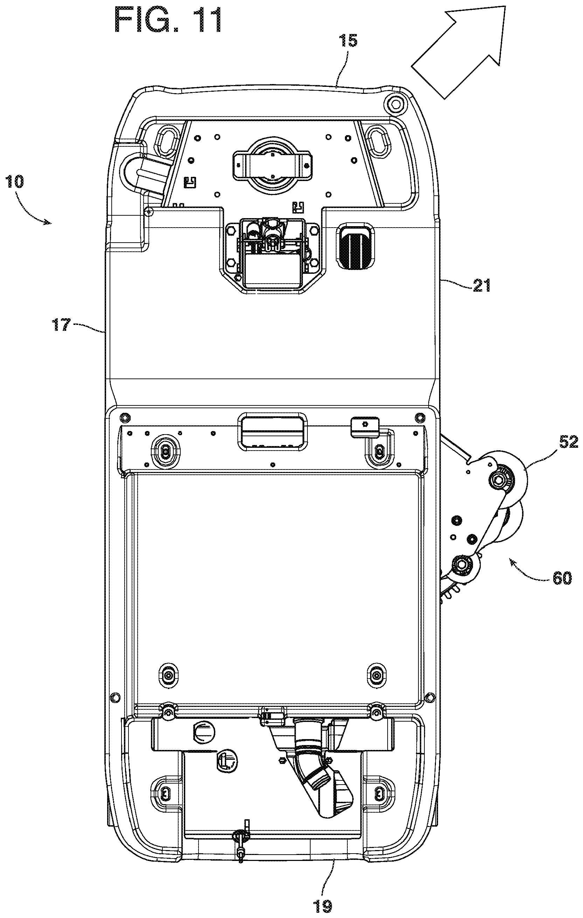

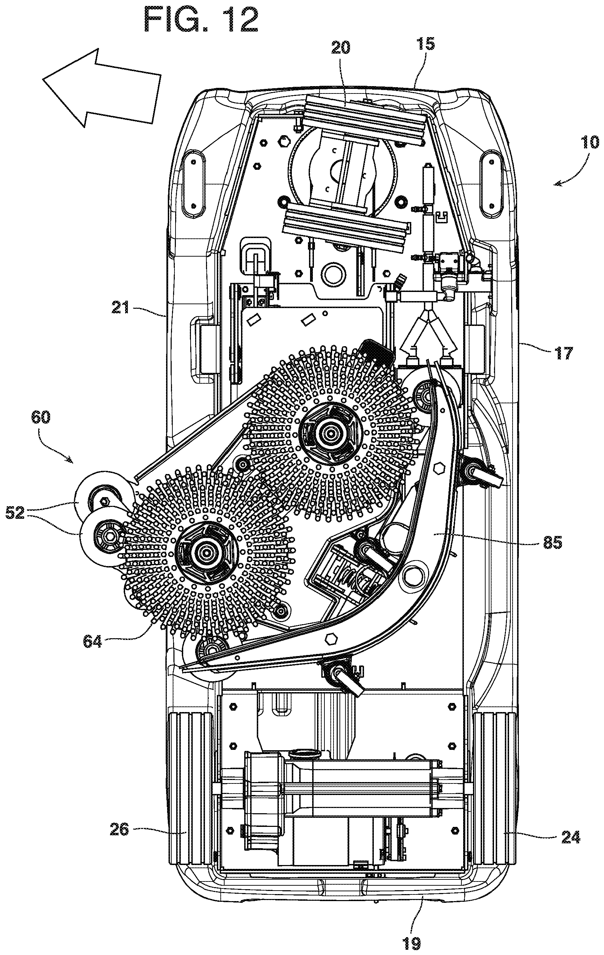

Figs. 11 and 12 show a top and bottom plan view respectively of a relevant portion of a floor cleaning apparatus 10, with the cleaning unit 60 in an offset cleaning mode, and the apparatus 10 turning to the right. As with the apparatus as shown in Figs. 7 and 8, the apparatus 10 is configured to clean edge or other floor areas to the lateral right side 21 of the apparatus 10.

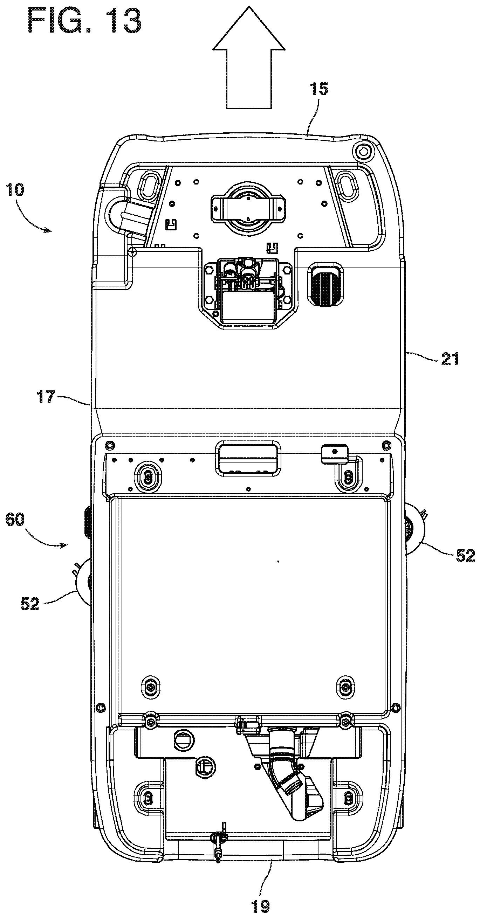

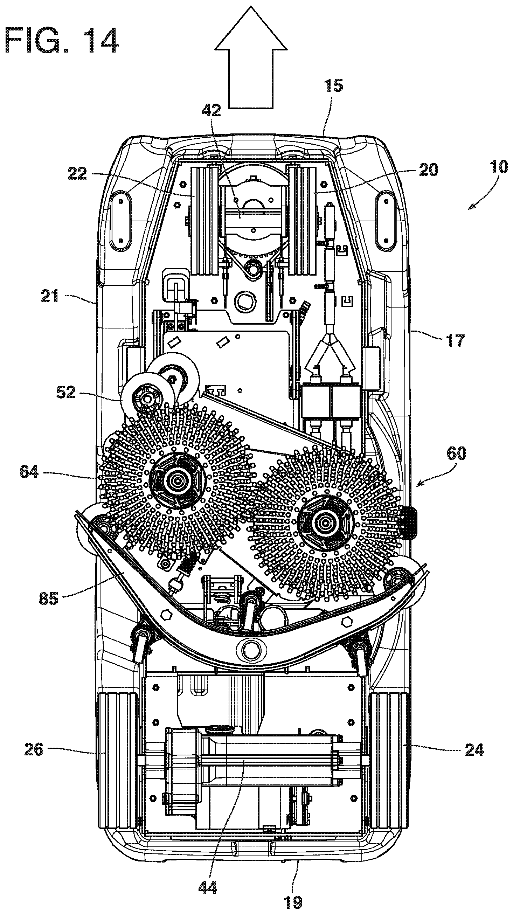

Figs. 13 and 14 show a top and bottom plan view respectively of a floor cleaning apparatus 10, with the cleaning unit 60 in a non-offset cleaning mode, and the apparatus 10 moving in a forward direction. It can be seen that substantially all of the cleaning unit 60, except for a portion of edge wheels 52, is positioned within and underneath the overall footprint of the floor cleaning apparatus 10. In the non-offset cleaning mode as shown, the apparatus 10 is configured to clean a floor where it is not critical to reach floor areas beyond the footprint of the apparatus 10, and/or when navigating relatively narrow floor areas, passage ways, and the like, where the lateral extent of the apparatus, including the cleaning unit 60, is desirably kept to a minimum.

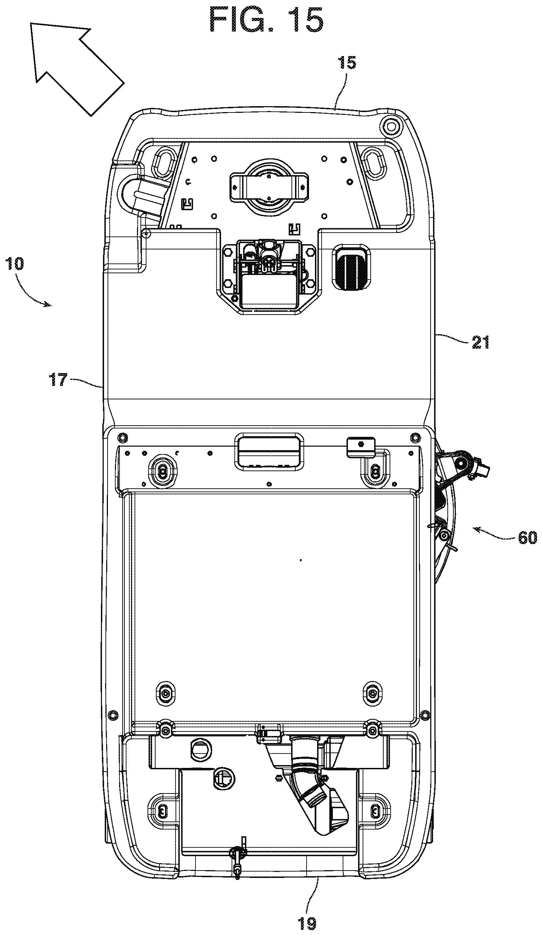

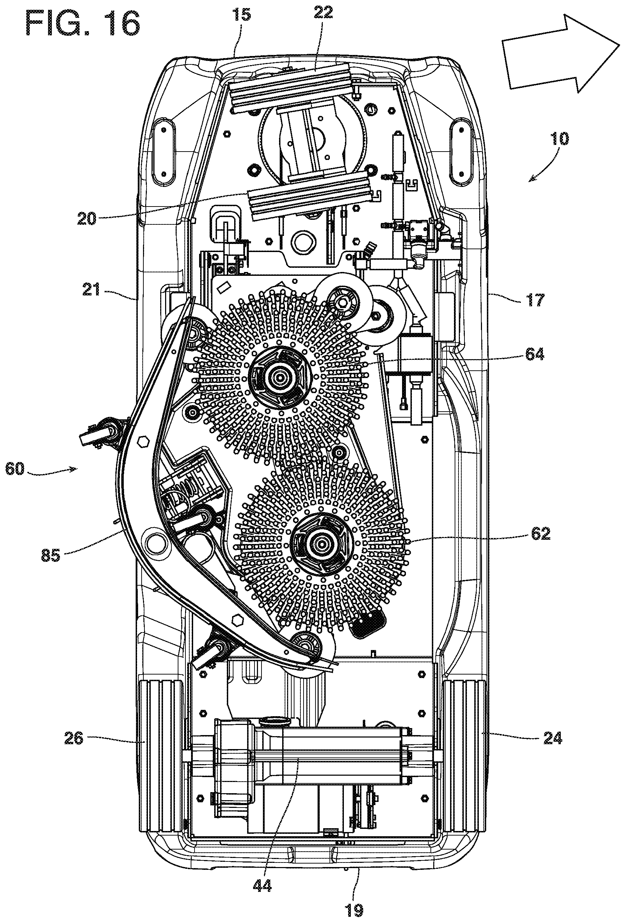

Figs. 15 and 16 show a top and bottom plan view respectively of a relevant portion of a floor cleaning apparatus 10, with the cleaning unit 60 in a non-offset cleaning mode, and the apparatus 10 turning to the left. As with the apparatus as shown in Figs. 13 and 14, the apparatus 10 is configured to clean a floor where it is not critical to reach floor areas beyond the footprint of the apparatus, and/or when navigating relatively narrow floor areas, passage ways, and the like, where the lateral extent of the apparatus, including the cleaning unit 60, is desirably kept to a minimum.

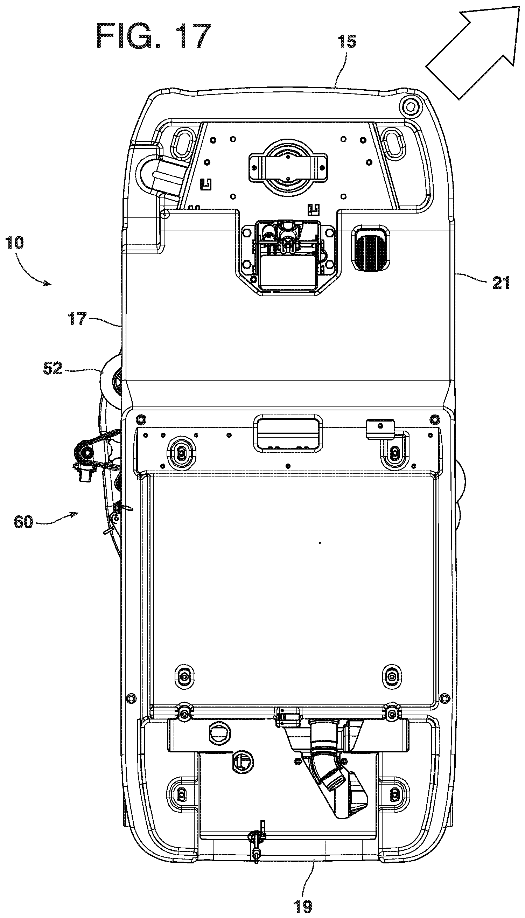

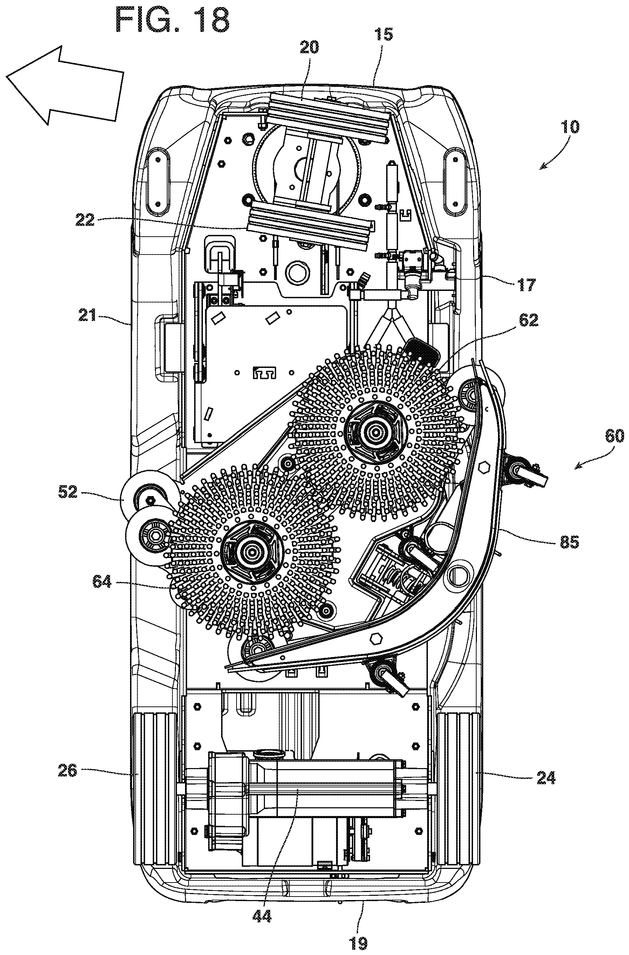

Figs. 17 and 18 show a top and bottom plan view respectively of a relevant portion of a floor cleaning apparatus 10, with the cleaning unit 60 in a non-offset cleaning mode, similar to the embodiment of Figs. 15 and 16, but with the apparatus 10 turning to the right.

In each of these cleaning modes and configurations, the cleaning unit 60 has in one embodiment a fixed working width that remains constant whether the apparatus is in an offset mode or non-offset mode.

Although in the embodiments illustrated herein, the cleaning unit 60 in the offset position extends beyond the lateral right side 21 of the floor cleaning apparatus 10, those of skill in the art will appreciate that in an alternative embodiment, the apparatus can be configured such that the cleaning unit in the offset position extends beyond the lateral left side 17 of the floor cleaning apparatus.

In an alternative embodiment, the cleaning unit 60 can have a variable working width in an offset mode and/or non-offset mode.

The floor cleaning apparatus 10 of the invention can in various embodiments utilize and incorporate various features typical of powered floor cleaning machines.

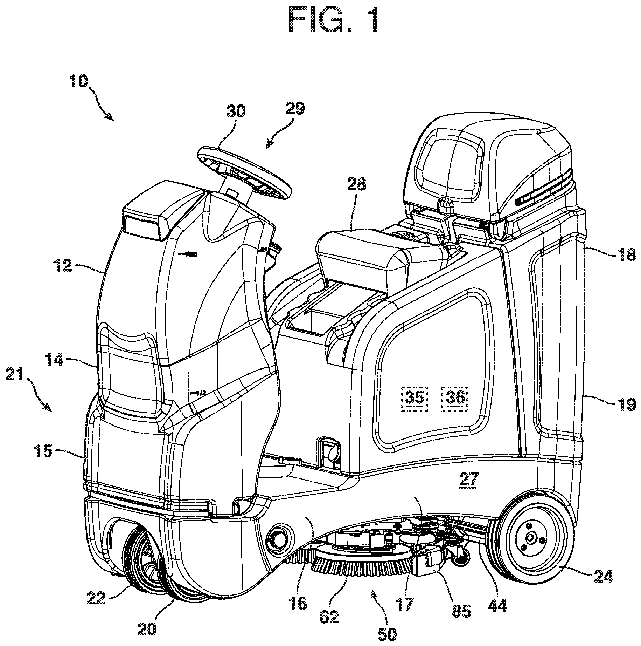

The housing 12 in one embodiment has a rearward component 18 that can include e.g. reservoirs for storing fresh 35 and spent 36 cleaning liquid (depicted, though not explicitly shown in Figure 1). The housing 12 can also include any of a mechanism (not shown) for dosing and dispensing fresh cleaning liquid onto the floor, and a squeegee/vacuum system 85 for recovering spent cleaning liquid from the floor. In one embodiment, the mechanism for dosing and dispensing can be located in the lower portion of housing 12, near the floor. In one embodiment, a squeegee/vacuum system 85 is located rearward of the mechanism for dosing and dispensing a cleaning fluid, and rearward of any cleaning brushes 62, 64 if present. The housing 12 in one embodiment has a forward component 14 that can be used to house functional elements such as the steering mechanism 29, and to serve as protection for the operator.

The cleaning unit 60 can comprise any device or assembly that affects or treats the floor surface. This can include a mechanism for the cleaning of carpets or hard surfaces of large floor areas, such as in hotels, factories, office buildings, shopping centers and the like. The cleaning unit 60 can include any of a movable body carrying at least one brush; a scrubber, sweeper, or the like. In one embodiment, the cleaning unit 60 includes any of a scrubbing device such as a motor-driven circular or cylindrical scrubbing brush or brushes; reservoirs 35, 36 for storing fresh and spent cleaning liquid; a device for dosing and dispensing a fresh cleaning liquid onto the floor, and a squeegee/vacuum system 85 for recovering spent cleaning liquid from the floor. The cleaning unit 60 in one embodiment comprises one or more cleaning implements, such as brushes or scrubbing pads and a motor for driving the implements.

In one embodiment, the operator seat is adjustable to enable the operator to adjust the height of the seat to accommodate the height of the operator.

In another embodiment, the steering mechanism is adjustable to optimize its location for the benefit and comfort of the operator.

In one embodiment, the present invention can be utilized in conjunction with the invention disclosed in US provisional patent application serial no. 62/058,733 (Scheiwiller), entitled "Ergonomic Floor Cleaning Apparatus", filed on October 2, 2014; that application incorporated in its entirety herein by reference. Thus, the present floor cleaning apparatus 10 can be configured such that when the apparatus is in an operative or navigational mode, the human operator is situated on the seat such that the operator is in a partially seated and partially standing position.

### Statement of Embodiments of the Invention

The present application is directed in various embodiments to the subject matter described in the following paragraphs. These are optional embodiments of any of the apparatus and method aspects of the invention as described hereinabove. For each aspect, these features can be incorporated alone or in any suitable combination of these features:
The cleaning unit has a fixed working width.
The housing comprises a forward component, an intermediate component, and a rearward component.
The floor cleaning apparatus comprises an operator seat.
The floor cleaning apparatus comprises a chassis.
The cleaning unit comprises a brush assembly.
The floor cleaning apparatus comprises a lifting device adapted to selectively raise and lower the cleaning assembly.
The cleaning assembly comprises a support plate that supports any of the offset mechanism, the swing mechanism, and the cleaning unit.
The floor cleaning apparatus comprises any of a motor-driven scrubbing brush, a scrubbing pad, a polisher, a vacuum system, a spray extractor, a reservoir for storing fresh cleaning liquid, a reservoir for storing spent cleaning liquid, a device for dispensing fresh cleaning liquid onto the floor, and a squeegee/vacuum system for recovering spent cleaning liquid from the floor.
The plurality of wheels comprises two front wheels connected with a front axle, and two rear wheels connected with a rear axle, wherein the two front wheels are spaced apart a distance less than the distance between the two rear wheels.
The cleaning assembly comprises a biasing member.
The floor cleaning apparatus is configured such that when the apparatus is in a navigational mode, the human operator is situated on the seat such that the operator is in a partially seated and partially standing position.
When the floor cleaning apparatus is in a navigational mode, the back of the human operator is substantially vertical.
When the floor cleaning apparatus is in a navigational mode, the upper legs of the human operator are sloped downward toward the front end of the floor cleaning apparatus.
When the floor cleaning apparatus is in a navigational mode, the lower legs of the human operator are substantially vertical, or slightly inclined toward the front end of the floor cleaning apparatus.
When the floor cleaning apparatus is in a navigational mode, the human operator is situated at substantially the same height as if the human operator were standing adjacent the floor cleaning apparatus.
When the floor cleaning apparatus is in a navigational mode, the overall position of the human operator is substantially equidistant between the front end and the back end of the apparatus.
When the floor cleaning apparatus is in a navigational mode, the human operator is situated close to or at the longitudinal center of the floor cleaning apparatus.
The cleaning unit comprises a device for polishing the floor.
The cleaning unit comprises a device for vacuuming the floor.

Embodiments above have been described in an illustrative manner, and the terminology used is intended to be descriptive rather than limiting. Modifications and variations of the illustrated embodiments are possible in light of the above teachings. Therefore, within the scope of the appended claims, wherein reference numerals are provided merely for convenience and are not to be in any way limiting, the invention may be practiced other than as specifically described in the illustrative embodiments.

## Claims

1. A floor cleaning apparatus (10) for cleaning a floor, the apparatus (10) adapted to traverse a path of travel, comprising:
a housing (12);
a plurality of wheels (20, 22, 24, 26) by which the floor cleaning apparatus (10) is adapted to move across the floor in a direction of travel, the direction of travel at least partially defining a front end (15), a back end (19), and first (17) and second (21) lateral sides of the floor cleaning apparatus (10);
a motive device (27) for moving the apparatus across the floor;
a steering mechanism (29); and
a cleaning assembly (50) comprising:
a cleaning unit (60),
and
a swing mechanism (80) linking the cleaning unit (60) to the steering mechanism (29) and configured such that, when the floor cleaning apparatus (10) is in an operative mode, the cleaning unit (60) reorients its position in synchronization with the path of travel of the floor cleaning apparatus (10),
**characterized in that** the cleaning assembly (50) further comprises an offset mechanism (70) adapted to move the cleaning unit (60) to or from an offset position.

2. The floor cleaning apparatus (10) of claim 1 wherein the swing mechanism (80) links the cleaning unit (60) to the steering mechanism (29) at a pivot wheel (81) spaced from the steering mechanism (29), in particular wherein the cleaning unit (60) is configured to pivot about the axis of the pivot wheel (81).

3. The floor cleaning apparatus of claim 2, wherein pivot wheel (81) is connected, by means of an endless belt or cable (82), to steering mechanism (29) whereby, in operation, as an operator of the floor cleaning apparatus (10) turns to the left or the right using the steering mechanism (29), the cleaning unit (60) swings and reorients in synchronization with the steering mechanism (29).

4. The floor cleaning apparatus of any one of the preceding claims wherein the swing mechanism (80) is configured with capability of incorporating a transition ratio between the degree of turn of the steering wheel, and the degree of turn of the cleaning unit, in particular wherein the swing mechanism (80) is not linked directly to the steering axle of the steering mechanism.

5. The floor cleaning apparatus of any one of the preceding claims, wherein the offset mechanism (70) is configured to enable the cleaning unit (60) to move from a non-offset position and cleaning mode to an offset position and cleaning mode, or from an offset position and cleaning mode to a non-offset position and cleaning mode, and wherein the floor cleaning apparatus is configured to operate selectively in either the offset cleaning mode or the non-offset cleaning mode.

6. The floor cleaning apparatus of claim 5 wherein, both when the floor cleaning apparatus operates in an offset cleaning mode and when the floor cleaning apparatus operates in a non-offset cleaning mode, the swing mechanism (80) links said cleaning unit (60) to the steering mechanism (29) such that the cleaning unit (60) reorients its position in synchronization with the path of travel of the floor cleaning apparatus (10).

7. The floor cleaning apparatus of claim 5 or 6 wherein the cleaning unit (60) includes one or more biasing members (51), optionally in the form of one or more springs, configured to facilitate movement of the offset mechanism (70) and thus of the cleaning unit (60) to and from an offset position.

8. The floor cleaning apparatus of claim 7 wherein the cleaning unit (60) is configured to move toward the non-offset position, toward an underside of the apparatus, when said cleaning unit is operating in an offset position and mode and bumps into an obstacle, and wherein after engagement with the obstacle has discontinued, cleaning unit (60) is configured to return to the offset position with the assistance of the one or more biasing members (51).

9. The floor cleaning apparatus of any one of the preceding claims from 5 to 8 wherein the cleaning unit (60) has fixed working width, whereby the width of the portion of the cleaning unit that effects cleaning, remains constant both in the offset mode and in the non-offset mode.

10. The floor cleaning apparatus of any one of the preceding claims wherein the cleaning unit (60) in the offset position extends beyond the lateral right side (21) of the floor cleaning apparatus (10), or wherein the cleaning unit (60) in the offset position extends beyond the lateral left side (17) of the floor cleaning apparatus.

11. The floor cleaning apparatus (10) of any one of the preceding claims comprising a lifting device (90) adapted to selectively raise and lower the cleaning assembly (50).

12. The floor cleaning apparatus (10) of any one of the preceding claims wherein the cleaning assembly (50) comprises a support plate (73) that supports the offset mechanism (70) and the cleaning unit (60), optionally wherein the support plate supports any of the offset mechanism, the swing mechanism, and the cleaning unit.

13. The floor cleaning apparatus (10) of any one of the preceding claims wherein the cleaning unit (60) comprises any of:
a motor-driven scrubbing brush (62, 64);
a scrubbing pad;
a polisher;
a vacuum system;
a spray extractor;
a reservoir for storing fresh cleaning liquid (35);
a reservoir for storing spent cleaning liquid (36);
a device for dispensing fresh cleaning liquid onto the floor; and
a squeegee/vacuum system (85) for recovering spent cleaning liquid from the floor.

14. A method for cleaning a floor comprising:
providing a floor cleaning apparatus (10) according to any one of the preceding claims, the apparatus adapted to traverse a path of travel; and
navigating the apparatus (10) across the floor while cleaning the floor.

15. A method for cleaning a floor according to claim 14 comprising:
reorienting the cleaning unit (60) by controlling the steering mechanism (29) while navigating the apparatus (10) to clean the floor and/or actuating the offset mechanism to move the cleaning unit from one to the other of the offset and non-offset positions.

## Patentansprüche

1. Bodenreinigungsvorrichtung (10) zum Reinigen eines Bodens, wobei die Vorrichtung (10) dazu eingerichtet ist, einen Fahrweg zu durchlaufen, umfassend:
ein Gehäuse (12);
eine Mehrzahl von Rädern (20,22, 24,26), durch welche die Bodenreinigungsvorrichtung (10) dazu eingerichtet ist, sich in einer Fahrtrichtung über den Boden zu bewegen, wobei die Fahrtrichtung wenigstens teilweise ein vorderes Ende (15), ein hinteres Ende (19) und erste (17) und zweite (21) laterale Seiten der Bodenreinigungsvorrichtung (10) definiert;
eine Antriebseinrichtung (27) zum Bewegen der Vorrichtung über den Boden;
einen Lenkmechanismus (29); und
eine Reinigungsanordnung (50), umfassend:
eine Reinigungseinheit (60),
und
einen Schwenkmechanismus (80), welcher die Reinigungseinheit (60) mit dem Lenkmechanismus (29) verbindet und derart eingerichtet ist, dass, wenn sich die Bodenreinigungsvorrichtung (10) in einem Betriebsmodus befindet, die Reinigungseinheit (60) ihre Position in Sychronisation mit dem Fahrweg der Bodenreinigungsvorrichtung (10) reorientiert,
**dadurch gekennzeichnet, dass** die Reinigungsanordnung (50) ferner einen Versatzmechanismus (70) umfasst, welcher dazu eingerichtet ist, die Reinigungseinheit (60) zu oder von einer Versatzposition zu bewegen.

2. Bodenreinigungsvorrichtung (10) nach Anspruch 1, wobei der Schwenkmechanismus (80) die Reinigungseinheit (60) an einem Schwenkrad (81), welches von dem Lenkmechanismus (29) beabstandet ist, mit dem Lenkmechanismus (29) verbindet, insbesondere wobei die Reinigungseinheit (60) dazu eingerichtet ist, um die Achse des Schwenkrades (81) zu schwenken.

3. Bodenreinigungsvorrichtung nach Anspruch 2, wobei das Schwenkrad (81) mittels eines endlosen Bandes oder Kabels (82) mit dem Lenkmechanismus (29) verbunden ist, wodurch, im Betrieb, wenn ein Bediener der Bodenreinigungsvorrichtung (10) unter Verwendung des Lenkmechanismus (29) nach links oder rechts abbiegt, die Reinigungseinheit (60) in Synchronisation mit dem Lenkmechanismus (29) schwenkt und sich reorientert.

4. Bodenreinigungsvorrichtung nach einem der vorhergehenden Ansprüche, wobei der Schwenkmechanismus (80) mit der Fähigkeit eines Inkorporierens eines Übersetzungsverhältnisses zwischen dem Grad einer Drehung des Lenkrades und dem Grad einer Drehung der Reinigungseinheit eingerichtet ist, insbesondere wobei der Schwenkmechanismus (80) nicht unmittelbar mit der Lenkachse des Lenkmechanismus verbunden ist.

5. Bodenreinigungsvorrichtung nach einem der vorhergehenden Ansprüche, wobei der Versatzmechanismus (70) dazu eingerichtet ist, der Reinigungseinheit (60) zu ermöglichen, sich von einem Nicht-Versatzposition-und-Reinigung-Modus zu einem Versatzposition-und-Reinigung-Modus oder von einem Versatzposition-und-Reinigung-Modus zu einem Nicht-Versatzposition-und-Reinigung-Modus zu bewegen, und wobei die Bodenreinigungsvorrichtung dazu eingerichtet ist, selektiv in entweder dem Versatz-Reinigung-Modus oder dem Nicht-Versatz-Reinigung-Modus betrieben zu werden.

6. Bodenreinigungsvorrichtung nach Anspruch 5, wobei, sowohl wenn die Bodenreinigungsvorrichtung in einem Versatz-Reinigung-Modus betrieben wird als auch wenn die Bodenreinigungsvorrichtung in einem Nicht-Versatz-Reinigung-Modus betrieben wird, der Schwenkmechanismus (80) die Reinigungseinheit (60) derart mit dem Lenkmechanismus (29) verbindet, dass sich die Reinigungseinheit (60) in Synchronisation mit dem Fahrweg der Bodenreinigungsvorrichtung (10) in ihrer Position reorientiert.

7. Bodenreinigungsvorrichtung nach Anspruch 5 oder 6, wobei die Reinigungseinheit (60) ein oder mehrere Vorspannelemente (51), optional in der Form einer oder mehrerer Federn, umfasst, welche dazu eingerichtet sind, eine Bewegung des Versatzmechanismus (70) und somit der Reinigungseinheit (60) zu und von einer Versatzposition zu erleichtern.

8. Bodenreinigungsvorrichtung nach Anspruch 7, wobei die Reinigungseinheit (60) dazu eingerichtet ist, sich in Richtung der Nicht-Versatzposition, in Richtung einer Unterseite der Vorrichtung, zu bewegen, wenn die Reinigungseinheit in einem Versatzposition-und -Modus betrieben wird und gegen ein Hindernis stößt, und wobei, nachdem ein Eingriff mit dem Hindernis beendet worden ist, die Reinigungseinheit (60) dazu eingerichtet ist, mit der Unterstützung des einen oder der mehreren Vorspannelemente (51) zu der Versatzposition zurückzukehren.

9. Bodenreinigungsvorrichtung nach einem der vorhergehenden Ansprüche 5 bis 8, wobei die Reinigungseinheit (60) eine fixierte Arbeitsbreite aufweist, wodurch die Breite des Abschnitts der Reinigungseinheit, der ein Reinigen bewirkt, sowohl in dem Versatzmodus als auch in dem Nicht-Versatzmodus konstant bleibt.

10. Bodenreinigungsvorrichtung nach einem der vorhergehenden Ansprüche, wobei sich die Reinigungseinheit (60) in der Versatzposition über die laterale rechte Seite (21) der Bodenreinigungsvorrichtung (10) erstreckt, oder wobei sich die Reinigungseinheit (60) in der Versatzposition über die laterale linke Seite (17) der Bodenreinigungsvorrichtung erstreckt.

11. Bodenreinigungsvorrichtung (10) nach einem der vorhergehenden Ansprüche, umfassend eine Hubvorrichtung (90), welche dazu eingerichtet ist, die Reinigungsanordnung (50) selektiv anzuheben und abzusenken.

12. Bodenreinigungsvorrichtung (10) nach einem der vorhergehenden Ansprüche, wobei die Reinigungsanordnung (50) eine Halterungsplatte (73) umfasst, die den Versatzmechanismus (70) und die Reinigungseinheit (60) haltert, optional wobei die Halterungsplatte eines aus dem Versatzmechanismus, dem Schwenkmechanismus und der Reinigungseinheit haltert.

13. Bodenreinigungsvorrichtung (10) nach einem der vorhergehenden Ansprüche, wobei die Reinigungseinheit (60) eines umfasst aus:
einer motorgetriebenen Schrubberbürste (62, 64);
einem Schrubber-Pad;
einer Poliereinrichtung;
einem Vakuumsystem;
einer Spray-Extraktionseinrichtung;
einem Reservoir zum Aufbewahren von frischer Reinigungsflüssigkeit (35);
einem Reservoir zum Aufbewahren von verbrauchter Reinigungsflüssigkeit (36);
einer Vorrichtung zur Abgabe frischer Reinigungsflüssigkeit auf den Boden; und
einem Squeegee/Vakuum-System (85) zur Rückgewinnung verbrauchter Reinigungsflüssigkeit von dem Boden.

14. Verfahren zum Reinigen eines Bodens, umfassend:
Bereitstellen einer Bodenreinigungsvorrichtung (10) nach einem der vorhergehenden Ansprüche, wobei die Vorrichtung dazu eingerichtet ist, einen Fahrweg zu durchlaufen; und
Navigieren der Vorrichtung (10) über den Boden, während der Boden gereinigt wird.

15. Verfahren zum Reinigen eines Bodens nach Anspruch 14, umfassend:
Reorientieren der Reinigungseinheit (60) durch Steuern des Lenkmechanismus (29), während die Vorrichtung (10) navigiert wird, um den Boden zu reinigen und/oder Betätigen des Versatzmechanismus, um die Reinigungseinheit von einer zu der anderen aus der Versatz- und der Nicht-Versatzposition zu bewegen.

## Revendications

1. Appareil de nettoyage du sol (10) pour nettoyer un sol, l'appareil (10) adapté pour traverser un trajet de déplacement, comprenant :
un logement (12) ;
une pluralité de roues (20, 22, 24, 26) par lesquelles l'appareil de nettoyage du sol (10) est adapté pour se déplacer à travers le sol dans un sens de déplacement, le sens de déplacement définissant au moins partiellement une extrémité avant (15), une extrémité arrière (19), et de premiers (17) et seconds (21) côtés latéraux de l'appareil de nettoyage du sol (10) ;
un dispositif moteur (27) pour déplacer l'appareil à travers le sol ;
un mécanisme de direction (29) ; et
un ensemble de nettoyage (50) comprenant :
une unité de nettoyage (60), et
un mécanisme de bascule (80) liant l'unité de nettoyage (60) au mécanisme de direction (29) et configuré de sorte que, lorsque l'appareil de nettoyage du sol (10) se trouve sous un mode de fonctionnement, l'unité de nettoyage (60) réoriente sa position en synchronisation avec le trajet de déplacement de l'appareil de nettoyage du sol (10),
**caractérisé en ce que** l'ensemble de nettoyage (50) comprend en outre un mécanisme de décalage (70) adapté pour déplacer l'unité de nettoyage (60) vers ou depuis une position décalée.

2. Appareil de nettoyage du sol (10) selon la revendication 1 dans lequel le mécanisme de bascule (80) relie l'unité de nettoyage (60) au mécanisme de direction (29) au niveau d'une roue pivot (81) espacée du mécanisme de direction (29), en particulier où l'unité de nettoyage (60) est configurée pour pivoter autour de l'axe de la roue pivot (81).

3. Appareil de nettoyage du sol selon la revendication 2, dans lequel la roue pivot (81) est reliée, à l'aide d'une bande sans fin ou d'un câble (82), au mécanisme de direction (29) moyennant quoi, durant le fonctionnement, lorsqu'un opérateur de l'appareil de nettoyage du sol (10) tourne vers la gauche ou vers la droite en utilisant le mécanisme de direction (29), l'unité de nettoyage (60) bascule et se réoriente en synchronisation avec le mécanisme de direction (29).

4. Appareil de nettoyage du sol selon l'une quelconque des revendications précédentes dans lequel le mécanisme de bascule (80) est configuré avec la capacité d'incorporer un rapport de transition entre le degré de tour de la roue de direction, et le degré de tour de l'unité de nettoyage, en particulier où le mécanisme de bascule (80) n'est pas directement lié à l'axe de direction du mécanisme de direction.

5. Appareil de nettoyage du sol selon l'une quelconque des revendications précédentes, dans lequel le mécanisme de décalage (70) est configuré pour permettre à l'unité de nettoyage (60) de se déplacer depuis une position et mode nettoyage non décalées vers une position et mode nettoyage décalées, ou depuis une position et mode nettoyage décalées vers une position et mode nettoyage non décalées, et où l'appareil de nettoyage du sol est configuré pour fonctionner de manière sélective selon soit le mode nettoyage décalé soit le mode nettoyage non décalé.

6. Appareil de nettoyage du sol selon la revendication 5 dans lequel, à la fois lorsque l'appareil de nettoyage du sol fonctionne en un mode nettoyage décalé et lorsque l'appareil de nettoyage du sol fonctionne en un mode nettoyage non décalé, le mécanisme de bascule (80) relie ladite unité de nettoyage (60) au mécanisme de direction (29) de sorte que l'unité de nettoyage (60) réoriente sa position en synchronisation avec le trajet de déplacement de l'appareil de nettoyage du sol (10).

7. Appareil de nettoyage du sol selon la revendication 5 ou 6 dans lequel l'unité de nettoyage (60) comprend un ou plusieurs éléments de sollicitation (51), éventuellement sous la forme d'un ou plusieurs ressorts, configurés pour faciliter le mouvement du mécanisme de décalage (70) et ainsi de l'unité de nettoyage (60) vers et depuis une position décalée.

8. Appareil de nettoyage du sol selon la revendication 7 dans lequel l'unité de nettoyage (60) est configurée pour se déplacer vers la position non décalée, vers une partie inférieure de l'appareil, lorsque ladite unité de nettoyage fonctionne en une position et un mode décalés et cogne un obstacle, et où après que l'engagement avec l'obstacle s'est arrêté, l'unité de nettoyage (60) est configurée pour revenir à la position décalée à l'aide de l'un ou de plusieurs des éléments de sollicitation (51).

9. Appareil de nettoyage du sol selon l'une quelconque des revendications précédentes de 5 à 8 où l'unité de nettoyage (60) présente une largeur de travail fixe, moyennant quoi la largeur de la partie de l'unité de nettoyage qui effectue le nettoyage, demeure constante à la fois dans le mode décalé et dans le mode non décalé.

10. Appareil de nettoyage du sol selon l'une quelconque des revendications précédentes dans lequel l'unité de nettoyage (60) dans la position décalée s'étend au-delà du côté latéral droit (21) de l'appareil de nettoyage du sol (10), ou dans lequel l'unité de nettoyage (60) dans la position décalée s'étend au-delà du côté latéral gauche (17) de l'appareil de nettoyage du sol.

11. Appareil de nettoyage du sol (10) selon l'une quelconque des revendications précédentes comprenant un dispositif de levage (90) adapté pour élever et abaisser sélectivement l'ensemble de nettoyage (50).

12. Appareil de nettoyage du sol (10) selon l'une quelconque des revendications précédentes dans lequel l'ensemble de nettoyage (50) comprend une plaque de support (73) qui supporte le mécanisme de décalage (70) et l'unité de nettoyage (60), éventuellement dans lequel la plaque de support supporte n'importe lequel parmi le mécanisme de décalage, le mécanisme de bascule, et l'unité de nettoyage.

13. Appareil de nettoyage du sol (10) selon l'une quelconque des revendications précédentes dans lequel l'unité de nettoyage (60) comprend n'importe lequel parmi :
une brosse de frottage entraînée par un moteur (62, 64) ;
un tampon de frottage ;
un polisseur ;
un système d'aspiration ;
un extracteur à pulvérisation ;
un réservoir pour stocker le liquide de nettoyage frais (35) ;
un réservoir pour stocker le liquide de nettoyage épuisé (36) ;
un dispositif de distribution du liquide de nettoyage frais sur le sol ; et
un système de raclage/aspiration (85) pour récupérer le liquide de nettoyage épuisé du sol.

14. Procédé de nettoyage d'un sol comprenant :
la fourniture d'un appareil de nettoyage du sol (10) selon l'une quelconque des revendications précédentes, l'appareil adapté pour traverser un trajet de déplacement ; et
la navigation de l'appareil (10) à travers le sol tout en nettoyant le sol.

15. Procédé de nettoyage d'un sol selon la revendication 14 comprenant :
la réorientation de l'unité de nettoyage (60) en contrôlant le mécanisme de direction (29) tout en faisant naviguer l'appareil (10) pour nettoyer le sol et/ou en actionnant le mécanisme de décalage pour déplacer l'unité de nettoyage depuis l'une vers l'autre des positions décalée et non décalée.
